# EUROPÄISCHE PATENTSCHRIFT

(11) **EP 2 407 355 B1**
(45) Veröffentlichungstag und Bekanntmachung des Hinweises auf die Patenterteilung: **22.05.2013**
(21) Anmeldenummer: 11173389.5
(22) Anmeldetag: 11.07.2011
(51) Int. Cl.: B60T 7/20, B60T 11/10, B60T 13/38, B60T 13/68, B60T 15/18, B60T 17/18, B60T 15/20

(54) **Relaisventil und Verfahren zum Betreiben eines Relaisventils**
Relay valve and method for operating same
Soupape de relais et procédé de fonctionnement d'une soupape de relais

(30) Priorität: 12.07.2010 DE 102010026875
(43) Veröffentlichungstag der Anmeldung: 18.01.2012
(73) Patentinhaber: KNORR-BREMSE Systeme für Nutzfahrzeuge GmbH, 80809 München (DE)
(72) Erfinder: Kaupert, Oliver, 80995 München (DE); Mann, Daniel, 80993 München (DE); Balogh, Levente, 2310 Szigetszentmiklos (HU)
(74) Vertreter: Schönmann, Kurt

(56) Entgegenhaltungen:
- WO-A2-2009/098003
- DE-A1- 10 355 311
- DE-A1-102007 061 908

## Beschreibung

Die Erfindung betrifft ein Relaisventil mit einem Steuerkolben und einer Manschette, die beide in einer axialen Richtung beweglich sind, wobei ein erstes elastisches Element vorgesehen ist, das die Manschette in der axialen Richtung mit einer Vorspannkraft beaufschlagt

Die Erfindung betrifft weiterhin ein Verfahren zum Betreiben eines Relaisventils mit einem Steuerkolben und einer Manschette, die beide in einer axialen Richtung beweglich sind, wobei die Manschette in der axialen Richtung mit einer Vorspannkraft beaufschlagt wird.

Die vorliegende Offenbarung befasst sich mit einem Relaisventil, insbesondere einem Relaisventil eines elektrisch betätigbaren Feststellbremssystems, wie es beispielsweise aus der DE 10 2007 061908 A1 oder aus der DE 10 2008 007 877 B3 bekannt ist. Bei derartigen Systemen erfolgt die Entlüftung des Steuerraums der zentralen Steuerventileinrichtung, das heißt insbesondere die Entlüftung des die Federbremsspeicherzylinder be- und entlüftenden Relaisventils, über eine außen am Fahrzeugrahmen angeordnete Entlüftung, die somit Umwelteinflüssen von außen, zum Beispiel Spritzwasser, Strahlwasser, Staub oder Schlamm, ausgesetzt ist. Damit diese äußeren Umwelteinflüsse nicht über die Entlüftung in die Anlage eindringen können, muss zum Schutz ein entsprechendes Bauteil vorgesehen sein, welches in die Entlüftungsrichtung öffnet und in die entgegengesetzte Richtung sperrt. Dazu geeignet sind unter anderem Nutringe, leicht vorgespannte Gummischeiben oder Sinterfilter.

Diese zum Schutz vorgesehenen Bauteile können, insbesondere durch Vereisung oder Verschmutzung, ihre eigentliche Funktion verlieren, sodass sie an der Entlüftung einen erhöhten Staudruck verursachen. Dies ist besonders bei einem abgestellten Fahrzeug relevant, welches üblicherweise eine geschlossene Feststellbremse mit drucklosen Steuerleitungen aufweist. Weisen an die Steuerleitung angrenzende Ventile eine erhöhte Leckagerate auf, kann ein schleichender Druckaufbau in der Steuerleitung erfolgen. Auf diese Weise könnte sich in den Steuerleitungen der elektrisch betätigbaren Feststellbremse unbeabsichtigt ein großer Druck aufbauen, der zu einem ungewollten Betätigen der Feststellbremsanlage führen könnte, da der in den Steuerleitungen anstehende Druck 1:1 als Ausgangsdruck in die Federspeicher geleitet wird und diese langsam löst.

Bei einer konventionellen pneumatischen Parkbremsanlage, tritt diese Problematik nicht auf, da die Entlüftung der Steuerleitungen der Parkbremsanlage, die im Parkzustand mit der Atmosphäre verbunden sind, über das Handbremsventil erfolgt, welches im Inneren der Fahrerkabine geschützt angeordnet ist. Ein unerwünschter Druckaufbau in den Federspeichern kann somit sicher vermieden werden.

Der Erfindung liegt die Aufgabe zugrunde, die oben angesprochene Problematik auch im Zusammenhang mit einer elektrisch betätigbaren Feststellbremsanlage zu lösen.

Diese Aufgabe wird mit den Merkmalen der unabhängigen Ansprüche gelöst.

Vorteilhafte Ausführungsformen der Erfindung sind in den abhängigen Ansprüchen angegeben.

Das erfindungsgemäße Relaisventil baut auf dem gattungsgemäßen Stand der Technik dadurch auf, dass ein zweites elastisches Element vorgesehen ist, das den Steuerkolben in der axialen Richtung mit einer weiteren Vorspannkraft beaufschlagt. Auf dieser Weise wird die Charakteristik des Relaisventils so verschoben, dass zum Aussteuern eines gewissen Ausgangsdrucks ein höherer Steuerdruck notwendig ist als ohne das zweite elastische Element notwendig wäre. Es wird daher eine höhere Robustheit gegenüber einem unerwünschten Druckanstieg in der Steuerleitung des Relaisventils, insbesondere durch Leckagen, erreicht.

Nützlicherweise kann vorgesehen sein, dass das zweite elastische Element eine Feder ist. Eine Feder ist ein vergleichsweise robustes und dennoch kostengünstig herzustellendes Bauteil, welches in einfacher Weise in das Design bestehender Relaisventils integrierbar ist, so dass keine vollständige Neukonstruktion notwendig wird.

Weiterhin kann vorgesehen sein, dass der Steuerkolben und die Manschette voneinander unabhängig bewegbar sind. Somit kann sichergestellt werden, dass das zweite elastische Element lediglich den bereitgestellten Ausgangsdruck in Abhängigkeit von dem Steuerdruck beeinflusst.

Die Erfindung betrifft weiterhin ein elektrisch betätigbares Feststellbremssystem für ein Fahrzeug, insbesondere ein Nutzfahrzeug, mit einem erfindungsgemäßen Relaisventil.

Die Erfindung baut auf dem gattungsgemäßen Verfahren dadurch auf, dass der Steuerkolben in der axialen Richtung mit einer weiteren Vorspannkraft beaufschlagt wird. Auf dieser Weise werden die Vorteile und Besonderheiten des erfindungsgemäßen Relaisventils auch im Rahmen eines Verfahrens umgesetzt. Dies gilt auch für die nachfolgend angegebene besonders bevorzugte Ausführungsform des erfindungsgemäßen Verfahrens.

Das erfindungsgemäße Verfahren ist vorteilhafterweise dadurch weiter gebildet, dass der Steuerkolben unabhängig von der Manschette bewegt wird.

Die Erfindung wird nun mit Bezug auf die begleitenden Zeichnungen anhand besonders bevorzugter Ausführungsformen beispielhaft erläutert.

Es zeigen:
- Figur 1: ein Schnittbild eines Relaisventils;
- Figur 2: ein Schaltungsdiagramm eines elektrisch betätigbaren Feststellbremssystems mit einem Relaisventil; und
- Figur 3: den Ausgangsdruck eines Relaisventils in Abhängigkeit des angelegten Steuerdrucks für zwei verschiedene Relaisventile.

In den nachfolgenden Zeichnungen beschreiben gleiche Bezugzeichen gleiche oder vergleichbare Komponenten.

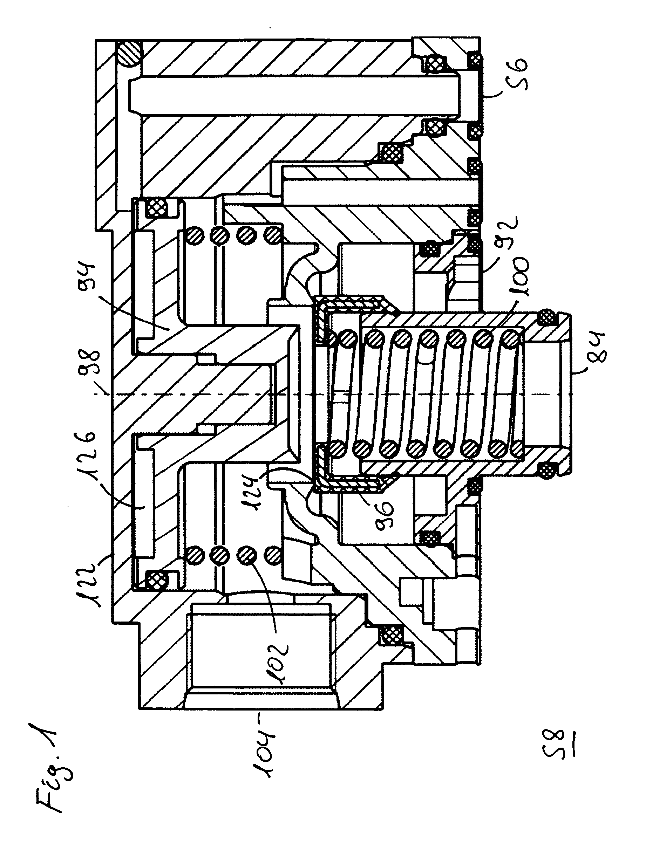

Figur 1 zeigt ein Schnittbild eines Relaisventils. Das dargestellte Relaisventils 58 umfasst einen Relaissteuereingang 56, einen Versorgungsanschluss 92, eine Entlüftung 84 und einen Belüftungsanschluss 104. In einem Gehäuse 122 des Relaisventils 58 sind entlang eine axialen Richtung 98 ein Steuerkolben 94 und eine Manschette 96 bewegbar angeordnet. Die Manschette 96 wird dabei durch ein erstes elastisches Element 100, welches als eine Feder ausgeführt ist, in der axialen Richtung 98 gegen einen Ventilsitz 124 gepresst. Das Gehäuse 122 kann sowohl einteilig aber insbesondere auch als mehrteiliges Gehäuse ausgeführt sein, zum Beispiel als ein Gehäuseunterteil welches mit einem Gehäuseoberteil verbunden ist, beispielsweise über zwei Schrauben. Ein zweites elastisches Element 102, welches ebenfalls als eine Feder ausgeführt ist, drückt den Steuerkolben 94 in der axialen Richtung 98 von der Manschette 96 weg. Der Steuerkolben 94 und die Manschette 96 sind somit voneinander unabhängig in der axialen Richtung 98 bewegbar. Das zweite elastische Element 102 muss nicht notwendigerweise in Form einer Feder ausgeführt sein, sondern kann beispielsweise auch in Form einer Gasdruckfeder oder als sonstiges federndes Element realisiert sein, um eine Vorspannkraft in der axialen Richtung 98 auf den Steuerkolben 94 auszuüben.

In der dargestellten Schaltposition des Relaisventils 58 liegt kein Steuerdruck an dem Relaissteuereingang 56 an, so dass der Steuerkolben 94 durch das zweite elastische Element 102 von der Manschette 96 in der axialen Richtung 98 abgehoben ist. Dabei verschließt die von dem ersten elastischen Element 100 gegen den Ventilsitz 124 gepresste Manschette 96 den Versorgungsanschluss 92, während der Belüftungsanschluss 104 mit der Entlüftung 84 verbunden ist. Dementsprechend ist, falls das dargestellte Relaisventil Bestandteil eines Feststellbremssystems ist, ein an dem Belüftungsanschluss 104 angeschlossener Feststellbremszylinder drucklos, das heißt geschlossen. Der Relaissteuereingang 56 ist in dieser Schaltstellung üblicherweise mit einer Entlüftung verbunden. Bei stärkeren Leckagen und einem erhöhten Staudruck an der Entlüftung steht dieser Staudruck im Steuerraum 126 des Relaisventils 58 an und versucht den Steuerkolben 94 zu bewegen, um den Belüftungsanschluss 104 mit dem Versorgungsanschluss 92 zu verbinden. Durch das zusätzliche zweite elastische Element 102 an dem Steuerkolben 94 muss sich ein wesentlich höherer Staudruck im Steuerraum 126 aufbauen, bevor ein Ausgangsdruck ausgesteuert wird. Das System wird daher wesentlich robuster gegen höhere Leckagen.

Zum Einlegen der Parkbremse, falls das Relaisventil 58 Bestandteil eines Feststellbremssystems ist, müssen die Federspeicher entlüftet werden. Dies geschieht durch Entlüftung des Steuerraums des Relaisventils 58. Das zweite elastische Element 102 an dem Steuerkolben 94 unterstützt und beschleunigt das Abheben des Steuerkolbens 94 von der Manschette 96 und damit die Entlüftung. So wird die kritische Zeit reduziert, während der zu Entlüftung eines Feststellbremssystems die Magnetventile bestromt werden müssen und ein Stromausfall das sichere Abschließen der Funktion verhindern würde. Dies kann besonders bei Gefahrguttransportern mit einer Notfallstromabschaltung wichtig sein.

Zum Lösen der Prarkbremse, falls das Relaisventil 58 Bestandteil eines Feststellbremssystems ist, müssen die Federspeicher belüftet werden. Dies geschieht durch Belüftung des Steuerraums des Relaisventils 58. Das zweite elastische Element 102 wirkt dem Steuerdruck entgegen und verzögert so ein Abheben des Steuerkolbens 94 von der Manschette 96, so dass die Belüftung verzögert wird. So wird die kritische Zeit überbrückt, während der zur Belüftung die Magnetventile der Feststellbremse bestromt werden müssen und ein Stromausfall das sichere Abschließen der Funktion verhindern würde. Dies würde dazu führen, dass ein Nutzfahrzeug mit dem vorhandenen Druck in den Federspeichern bereits bewegt werden könnte, obwohl das Hauptglied zur Sicherstellung des Fahrzustandes noch nicht in die Fahrstellung geschaltet hat.

Bei einer gestuften Druckabsenkung zur Bereitstellung einer die Betriebsbremse unterstützenden Bremswirkung, falls das Relaisventil 58 Bestandteil einer Feststellbremse ist, ist das Relaisventil 58 zunächst in seiner Abschlussstellung und die Feststellbremse ist geöffnet. Der Relaissteuereingang 56 wird nun stufenweise entlüftet, um eine Druckabsenkung in den Federspeicherzylindern zu erreichen. Der Belüftungsanschluss 104 wird aufgrund des zweiten elastischen Elements 102 bereits bei einer geringeren Druckdifferenz entlüftet. So kann bei gleichem Steuerdruck eine höhere Bremskraft erzielt werden. Dieser Steuerdruck liegt auch an der Steuerventileinrichtung 22 der Feststellbremse an, welche während der Hilfsbremsung über die Feststellbremse sicher in Fahrstellung bleiben muss. Dies kann bei einem höheren Druckniveau besser sichergestellt werden.

Bei einem Druckaufbau an dem Relaissteuereingang 56 wird der Steuerkolben 94 entgegen der durch das zweite elastische Element 102 aufgebrachten Vorspannkraft in der axialen Richtung 98 zu der Manschette 96 hinbewegt. Durch das Anpressen des Steuerkolbens 94 auf die Manschette 96 wird, bei einem ausreichenden Steuerdruck, der Belüftungsanschluss 104 von der Entlüftung 84 getrennt, so dass nach dem Abheben der Manschette 96 von dem Ventilsitz 124 ein Druckaufbau an dem Belüftungsanschluss 104 über den dann freigegebenen Versorgungsanschluss 92 möglich ist. Die Funktion des Relaisventils 58 wird nach erfolgtem Druckaufbau nicht durch das zweite elastische Element 102 beeinflusst, da sich das Relaisventil 58 in seiner so genannten Abschlussstellung befindet.

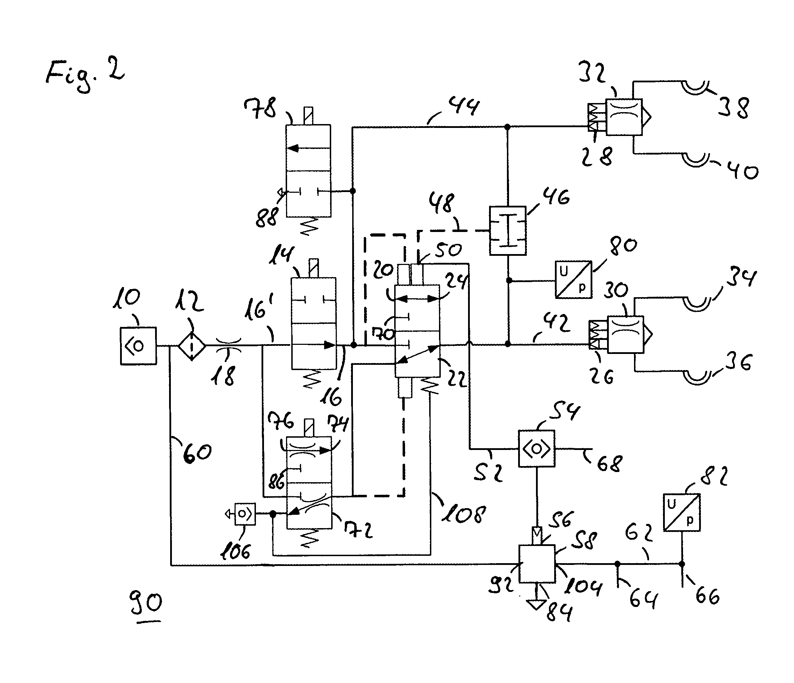

Figur 2 zeigt ein Schaltungsdiagramm eines elektrisch betätigbaren Feststellbremssystems mit einem Relaisventil. Die Schaltungen umfassen als zentrale Einrichtung 3/2-Wegeventile. Diese können jeweils durch zwei 2/2-Wegeventile ersetzt werden, wobei die anhand der 3/2-Wegeventil erläuterten Grundsätze dann im Rahmen der vorliegenden Erfindung auf die 2/2-Wegeventilgruppen zu übertragen sind. Das elektrisch betätigbare Feststellbremssystem 90 ist über ein Rückschlagventil 10 mit einer nicht dargestellten Druckluftaufbereitungsanlage verbunden. Auf das Rückschlagventil 10 folgt eine optionale Filtereinheit 12, über die Druckluft über eine optionale Drossel 18 einem Versorgungsmagnetventil 14, das als 2/2-Wegeventil ausgelegt ist, zugeführt wird. An den Ausgang des Versorgungsmagnetventils 14 ist über einen ersten Versorgungsleitungsabschnitt 16 ein erster Arbeitsanschluss 20 einer Steuerventileinrichtung 22 angeschlossen. Der Leitungsabschnitt mit der Filtereinheit 12 wird als zweiter Versorgungsleitungsabschnitt 16' bezeichnet. Die Steuerventileinrichtung 22 ist als pneumatisch ansteuerbares 3/2-Wegeventil ausgelegt. Ein zweiter Arbeitsanschluss 24 der Steuerventileinrichtung 22 führt über einen Anhängersteuerleitungszweig 42 zu einem Steuereingang 26 eines Anhängersteuermoduls 30. Dieses bedient einen Versorgungsanschluss 34 und einen Steueranschluss 36 der Anhängerkupplung. Ein Steuereingang 28 eines weiteren Anhängersteuermoduls 32 ist über einen weiteren Anhängersteuerleitungszweig 44 mit dem Versorgungsleitungszweig 16 verbunden. Es hat einen Versorgungsanschluss 38 und einen Steueranschluss 40. Die Anhängersteuerleitungszweige 42, 44 sind mit Eingängen eines Select-Low-Ventils 46 verbunden, dessen Ausgang über eine Steuerleitung 48 mit einem Steuereingang 50 der Steuerventileinrichtung 22 verbunden ist. Das Select-Low-Ventil 46 arbeitet so, dass an seinem Ausgang, das heißt in der Steuerleitung 48, der niedrigere Eingangsdruck ansteht, das heißt der niedrigere Druck aus den beiden Anhängersteuerungsleitungszweigen 42, 44. Die Steuerleitung 48 steht weiterhin über eine Relaissteuerleitung 52 und ein Wechselventil 54 mit dem Relaissteuereingang 56 des Relaisventils 58 in Verbindung. Das Relaisventil 58 bezieht an dem Versorgungsanschluss 92 über eine Relaisversorgungsleitung 60 Druckluft von einer Stelle stromaufwärts des Versorgungsmagnetventils 14. Eine Relaisausgangsleitung 62 an dem Belüftungsanschluss 104 führt zu Leitungszweigen 64, 66, an denen nicht dargestellte Federspeicherzylinder angeschlossen sind. An dem Wechselventil 54 ist ferner eine Betriebsbremsleitung 68 angeschlossen. Auf diese Weise kann beim Betätigen der Betriebsbremse automatisch die Feststellbremse geöffnet werden, um eine Überlastung der Federspeicherzylinder zu verhindern. Bei einem Kombizylinder ist der Federspeicher für die Parkbremse mit dem Steuerraum für die Betriebsbremse vereint. Im Parkzustand wirkt die Federkraft zur Sicherstellung der Bremswirkung. Wird im diesem Zustand gleichzeitig die Betriebsbremse betätigt, entsteht eine zusätzliche Kraft durch den ausgesteuerten Bremsdruck, was zu einer Überbelastung der Bremsmechanik führen kann. Deswegen wird der Betriebsbremsdruck zum Beispiel über das Wechselventil 54 an das Relaisventil 58 eingesteuert. Dieses gibt entsprechend der Ansteuerung Druck in die Federspeicher ab, der gegen Federkraft und Betriebsbremsdruck arbeitet und diese größtenteils kompensiert. Eine Überbelastung der Bauteile kann so vermieden werden. Das zweite elastische Element 102 kann hier zur Verringerung des Bremskraftverlustes beitragen, da der ausgesteuerte Druck des Relaisventils beeinflusst wird. Mit einem Entlüftungsanschluss 70 der Steuerventileinrichtung 22 ist ein erster Anschluss 74 einer Steuer- und Entlüftungsventileinrichtung 72 verbunden. Ein zweiter Anschluss 76 der Steuer- und Entlüftungsventileinrichtung 72 wird von einem Punkt zwischen der Filtereinheit 12 und dem Versorgungsmagnetventil 14 mit Druckluft versorgt. Ein dritter Anschluss 86 der Steuer- und Entlüftungseinrichtung 72 ist über ein Rückschlagventil 106 einer Entlüftung verbunden. Weiterhin ist ein als ein 2/2-Wegeventil ausgelegtes Entlüftungsmagnetventil 78 vorgesehen, das über den weiteren Anhängersteuerleitungszweig 44 mit dem Versorgungsleitungsabschnitt 16 verbunden ist. Das Entlüftungsmagnetventil 78 weist einen Entlüftungsmagnetventilanschluss 88 auf, der in einer Entlüftung mündet. Es sind ferner Drucksensoren 80, 82 zum Erfassen der Drücke an dem zweiten Arbeitsanschluss 24 der Steuerventileinrichtung 22 sowie der

Relaisausgangsleitung 62 vorgesehen. Steuerräume der Steuerventileinrichtung 22 sind über eine Druckausgleichsleitung 108 mit einer Entlüftung verbunden.

Bei dem in Figur 2 dargestellten Schaltzustand des elektrisch betätigbaren Feststellbremssystems 90 befinden sich das Versorgungsmagnetventil 14, die Steuerventileinrichtung 22, das Entlüftungsmagnetventil 78 und die Steuer- und Entlüftungsventileinrichtung 72 jeweils in einer ersten Schaltposition. In dem dargestellten Schaltzustand ist der zweite Arbeitsanschluss 24 der Steuerventileinrichtung 22 über die Steuer- und Entlüftungsventileinrichtung 72 entlüftet, so dass in Abwesenheit einer Druckbeaufschlagung über die Betriebsbremsleitung 68 auch der Steuereingang 56 des Relaisventils 58 entlüftet ist. Folglich sind die nicht dargestellten Federspeicherzylinder drucklos, so dass sich die Feststellbremse in ihrer Parkstellung befindet. Die Relaissteuerleitung 52 ist also drucklos und die nicht dargestellten Federspeicherbremszylinder sind geschlossen. Weiterhin liegt an den Steueranschluss 36 ein Steuerdruck für einen Anhänger an, während an dem Steueranschluss 40 gerade kein Steuerdruck für einen Anhänger anliegt. Zum Überführen der Feststellbremse in eine Fahrstellung wird die Steuer- und Entlüftungsventileinrichtung 72 in die nicht dargestellte Schaltposition umgeschaltet. Folglich baut sich insbesondere in dem Steuerleitungszweig 42, der Relaissteuerleitung 52 und an dem Relaissteuereingang 56 ein Druck auf. Dieser Druck führt beim Überschreiten eines Schwellenwertes zum Durchschalten des Relaisventils 58, so dass die Federspeicherzylinder mit Druck beaufschlagt werden und die Feststellbremse gelöst wird. Ebenso ist der Druck in der Steuerleitung 48 die treibende Kraft zum Umschalten des Steuerventils 22. Je nach Schaltstrategie kann dieses Umschalten erfolgen, bevor oder nachdem die Steuer- und Entlüftungsventileinrichtung 72 wieder in ihren dargestellten stromlosen Zustand überführt wird. Wurde somit also wie auch immer erreicht, dass die Steuerventileinrichtung 22 umgeschaltet hat, so kann sich der Druck an den Steuereingängen 50 und 56 der Steuerventileinrichtung 22 und des Relaisventils 58 weiter aufbauen, da die entsprechenden Leitungszweige nun aus dem Versorgungsleitungsabschnitt 16 mit Druckluft versorgt werden. Insbesondere verbleibt die Steuerventileinrichtung 22 beim Ausbleiben weiterer Schaltvorgänge der Magnetventile 14, 72, 78 in ihrem Zustand. Ein Stromausfall hat hierauf keinen Einfluss, so dass kein unbeabsichtigtes Überführen der Feststellbremsanlage 90 in ihren Parkzustand stattfinden kann. Ein solches Umschalten erfolgt hingegen planmäßig dadurch, dass das Entlüftungsmagnetventil 78 bestromt wird, so dass der Druck erst im Versorgungsleitungsabschnitt 16 und somit auch an den Steuereingängen 50, 56 der Steuerventileinrichtung 22 und des Relaisventils 58 abnimmt. Dies führt zu einem Umschalten der Steuerventileinrichtung 22 in ihre dargestellte Stellung und zu einem nachfolgenden vollständigen Entlüften der Steuereingänge 50, 56 der Steuerventileinrichtung 22 und des Relaisventils 58. Die so eingenommene Parkstellung ist durch die Federwirkung in der Steuerventileinrichtung 22 gesichert, so dass ein Stromausfall wiederum nicht dazu führen kann, dass unbeabsichtigt ein Übergang vom Parkzustand in den Fahrzustand erfolgen kann. Wenn die Feststellbremse geöffnet ist, befindet sich das Relaisventil 58 in seiner Abschlussstellung, so dass die geänderte Charakteristik des Relaisventils 58 nicht in Gewicht fällt.

Ein weiterer Schaltzustand des dargestellten Systems liegt dann vor, wenn das Entlüftungsventil 78, das Versorgungsmagnetventil 14 und die Steuer- und Entlüftungsventileinrichtung 72 bestromt werden, so dass der Steuereingang 50 der Steuerventileinrichtung 22 und der Steuereingang 56 des Relaisventils 58 entlüftet werden, der Steuereingang 26 des Anhängersteuerventils 30 hingegen belüftet wird. Diese Druckverhältnisse im System bewirken ein Lösen der Anhängerbremse, während die Feststellbremse des Zugfahrzeugs eingelegt wird oder bleibt. Es liegt also ein Anhängertestzustand vor, bei dem überprüft werden kann, ob es der gesamte aus Zugfahrzeug und Anhänger bestehende Zug alleine von der Feststellbremse des Zugfahrzeugs gehalten werden kann. Die durch das zweite elastische Element 102 veränderte Charakteristik des Relaisventils 58 beeinflusst dies nicht.

Vor dem Abstellen des Fahrzeuges wird zum Schließen des Feststellbremssystems 90 die in den nicht dargestellten Federspeicherbremszylindern vorhandene Druckluft über die beiden Leitungszweige 64, 66 durch die Entlüftung 84 des Relaisventils 58 abgelassen.

Dabei werden mehrere Liter Druckluft aus den Federspeicherbremszylindern und den Zuführleitungen abgelassen, so dass eventuell an der Entlüftung 84 anhaftende Verschmutzungen oder Eis, welche sich während der vorangegangen Fahrt angesammelt haben könnten, sicher entfernt werden.

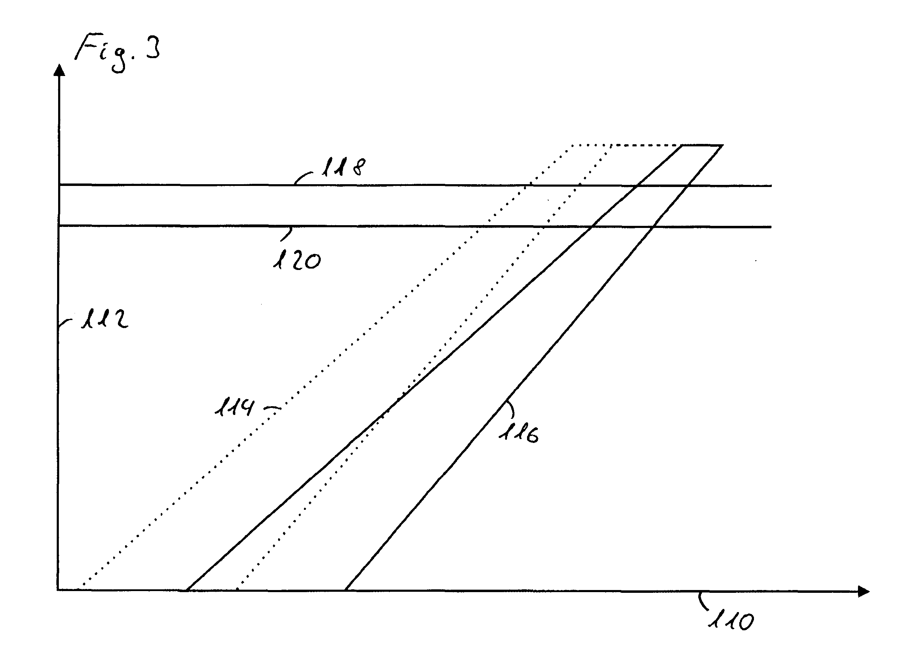

Figur 3 zeigt den Ausgangsdruck eines Relaisventils in Abhängigkeit des angelegten Steuerdrucks für zwei verschiedene Relaisventile. Auf der X-Achse aufgetragen ist ein Steuerdruck 110, beispielsweise in Bar, welcher an den aus Figur 1 bekannten Relaissteuereingang 56 angelegt wird. Auf der Y-Achse aufgetragen ist ein Belüftungsdruck 112, ebenfalls in Bar, welcher als Folge des angelegten Steuerdrucks an dem Belüftungsanschluss 104 bereitgestellt wird. Parallel zu der X-Achse sind zwei waagerechte Lienen eingezeichnet, die den notwendigen Belüftungsdruck für das vollständige Öffnen eines 24"+ Federspeicherzylinders 118 beziehungsweise eines 24"/30" Federspeicherzylinders 120 exemplarisch markieren. In das Druckdiagramm sind zwei unterschiedliche Druckverläufe 114, 116 eingezeichnet, wobei der Druckverlauf 114 einem Relaisventil ohne ein zweites elastisches Element zugeordnet werden kann, während der Druckverlauf 116 einem Relaisventil mit einem zweiten elastischen Element zugeordnet werden kann. Bei dem Druckverlauf 114 für ein Relaisventil ohne ein zweites elastisches Element, folgt der Belüftungsdruck 1:1 dem angelegten Steuerdruck, bis auf geringe Verluste, die mechanisch bedingt sind. Der dargestellte Druckverlauf 114 entspricht dabei einer typischen Hysterese. Die zweite dargestellte Kurve entspricht den Druckverlauf 116 eines Relaisventils mit einem zweiten elastischen Element. Aufgrund des zweiten elastischen Elements ist der gesamte Druckverlauf gegenüber der Kurve 114 in dem Diagramm nach rechts verschoben, und zwar im Wesentlichen um den zur Überwindung der durch das zweite elastische Element verursachten Vorspannkraft notwendigen zusätzlichen Steuerdrucks. Durch die Verwendung eines zweiten elastischen Elements mit einer nichtlinearen Kennlinie kann weiterer Einfluss auf den Druckverlauf genommen werden, so dass der Belüftungsdruck abzüglich der mechanischen Verluste und des Offsets durch die Vorspannkraft nicht mehr 1:1 mit dem Steuerdruck skaliert.

### Bezugszeichenliste

- 10: Rückschlagventil
- 12: Filtereinheit
- 14: Versorgungsmagnetventil
- 16: erster Versorgungsleitungsabschnitt
- 16': zweiter Versorgungsleitungsabschnitt
- 18: Drossel
- 20: erster Arbeitsanschluss
- 22: Steuerventileinrichtung
- 24: zweiter Arbeitsanschluss
- 26: Steuereingang
- 28: Steuereingang
- 30: Anhängersteuermodul
- 32: weiteres Anhängersteuermodul
- 34: Versorgungsanschluss
- 36: Steueranschluss
- 38: Versorgungsanschluss
- 40: Steueranschluss
- 42: Anhängersteuerleitungszweig
- 44: weiterer Anhängersteuerleitungszweig
- 46: Select-Low-Ventil
- 48: Steuerleitung
- 50: Steuereingang
- 52: Relaissteuerleitung
- 54: Wechselventil
- 56: Relaissteuereingang
- 58: Relaisventil
- 60: Relaisversorgungsleitung
- 62: Relaisausgangsleitung
- 64: Leitungszweig
- 66: Leitungszweig
- 68: Betriebsbremsleitung
- 70: Entlüftungsanschluss
- 72: Steuer- und Entlüftungsventileinrichtung
- 74: zweiter Anschluss
- 76: erster Anschluss
- 78: Entlüftungsmagnetventil
- 80: Drucksensor
- 82: Drucksensor
- 84: Entlüftung
- 86: dritter Anschluss
- 88: Entlüftungsmagnetventilanschluss
- 90: elektrisch betätigbares Feststellbremssystem
- 92: Versorgungsanschluss Relaisventil
- 94: Steuerkolben
- 96: Manschette
- 98: axiale Richtung
- 100: erstes elastisches Element
- 102: zweites elastisches Element
- 104: Belüftungsanschluss
- 106: Rückschlagventil
- 108: Druckausgleichsleitung
- 110: Steuerdruck
- 112: Belüftungsdruck
- 114: Druckverlauf ohne zweites elastisches Element
- 116: Druckverlauf mit zweitem elastischem Element
- 118: 24"+ Federspeicherzylinder
- 120: 24"/30" Federspeicherzylinder
- 122: Gehäuse
- 124: Ventilsitz
- 126: Steuerraum Relaisventil

## Patentansprüche

1. Relaisventil (58) mit einem Steuerkolben (94) und einer Manschette (96), die beide in einer axialen Richtung (98) beweglich sind, wobei ein erstes elastisches Element (100) vorgesehen ist, das die Manschette (96) in der axialen Richtung (98) mit einer Vorspannkraft beaufschlagt, wobei ein zweites elastisches Element (102) vorgesehen ist, das den Steuerkolben (94) in der axialen Richtung (98) mit einer weiteren Vorspannkraft beaufschlagt **dadurch gekennzeichnet, dass** das zweite elastische Element (102) eine nichtlineare Kennlinie hat, so dass ein an einem Belüftungsanschluss (104) bereitgestellter Belüftungsdruck (112) abzüglich mechanischer Verluste und eines Offsets durch die weitere Vorspannkraft nicht mehr 1:1 mit einem an einem Relaissteuereingang (56) bereitgestellten Steuerdruck (110) skaliert.

2. Relaisventil (58) nach Anspruch 1, **dadurch gekennzeichnet, dass** das zweite elastische Element (102) eine Feder ist.

3. Relaisventil (58) nach Anspruch 1 oder 2, **dadurch gekennzeichnet, dass** der Steuerkolben (94) und die Manschette (96) voneinander unabhängig bewegbar sind.

4. Elektrisch betätigbares Feststellbremssystem (90) für ein Fahrzeug, insbesondere ein Nutzfahrzeug, mit einem Relaisventil (58) nach einem der vorhergehenden Ansprüche.

5. Verfahren zum Betreiben eines Relaisventils (58) mit einem Steuerkolben (94) und einer Manschette (96), die beide in einer axialen Richtung (98) beweglich sind, wobei die Manschette (96) in der axialen Richtung (98) mit einer Vorspannkraft beaufschlagt wird, wobei ein zweites elastisches Element (102) vorgesehen ist, das den Steuerkolben (94) in der axialen Richtung (98) mit einer weiteren Vorspannkraft beaufschlagt, **dadurch gekennzeichnet, dass** das zweite elastische Element (102) eine nichtlineare Kennlinie hat, so dass ein an einem Belüftungsanschluss (104) bereitgestellter Belüftungsdruck (112) abzüglich mechanischer Verluste und eines Offsets durch die weitere Vorspannkraft nicht mehr 1:1 mit einem an einem Relaissteuereingang (56) bereitgestellten Steuerdruck (110) skaliert.

6. Verfahren nach Anspruch 5, **dadurch gekennzeichnet, dass** der Steuerkolben (94) unabhängig von der Manschette (96) bewegt wird.

## Claims

1. Relay valve (58) comprising a control piston (94) and a collar (96), both of which are movable in an axial direction (98), wherein a first elastic element (100) is provided to apply a preloading force to the collar (96) in the axial direction (98), wherein a second elastic element (102) is provided to apply a further preloading force to the control piston (94) in the axial direction (98), **characterised in that** the second elastic element (102) has a non-linear characteristic, so that a ventilation pressure (112) made available at a ventilation port (104) minus mechanical losses and an offset through the further preloading force no longer scales 1:1 with a control pressure (110) made available at a relay control inlet (56).

2. Relay valve (58) according to claim 1, **characterised in that** the second elastic element (102) is a spring.

3. Relay valve (58) according to claim 1 or 2, **characterised in that** the control piston (94) and the collar (96) are movable independently of one another.

4. Electrically operated parking brake system (90) for a vehicle, in particular for a commercial vehicle, comprising a relay valve (58) according to any of the preceding claims.

5. Method for operating a relay valve (58) comprising a control piston (94) and a collar (96), both of which are movable in an axial direction (98), wherein a preloading force is applied to the collar (96) in the axial direction, wherein a second elastic element (102) is provided to apply a further preloading force to the control piston (94) in the axial direction (98), **characterised in that** the second elastic element (102) has a non-linear characteristic, so that a ventilation pressure (112) made available at a ventilation port (104) minus mechanical losses and an offset through the further preloading force no longer scales 1:1 with a control pressure (110) made available at a relay control inlet (56).

6. Method according to claim 5, **characterised in that** the control piston (94) is moved independently of the collar (96).

## Revendications

1. Soupape (58) de relais ayant un piston (94) de commande et une manchette (96), qui sont mobiles tous deux dans une direction (98) axiale, dans laquelle il est prévu un premier élément (100) élastique, qui soumet la manchette (96) dans la direction (98) axiale à une force de précontrainte, un deuxième élément (102) élastique étant prévu, qui soumet le piston (94) de commande dans la direction (98) axiale à une autre force de précontrainte, **caractérisée en ce que** le deuxième élément (102) élastique a une caractéristique non-linéaire, de sorte qu'une pression (112) d'alimentation en air mise à disposition sur un raccord (104) d'alimentation en air, après déduction de pertes mécaniques et d'un décalage, n'est plus par l'autre force de précontrainte mise à l'échelle 1:1 avec une pression (110) de commande mise à disposition sur une entrée (56) de commande de relais.

2. Soupape (58) de relais suivant la revendication 1, **caractérisée en ce que** le deuxième élément (102) élastique est un ressort.

3. Soupape (58) de relais suivant la revendication 2, **caractérisée en ce que** le piston (94) de commande et la manchette (96) sont mobiles indépendamment l'un de l'autre.

4. Système (90) de frein de stationnement à actionnement électrique pour un véhicule, notamment un véhicule utilitaire, ayant une soupape (58) de relais suivant l'une des revendications précédentes.

5. Procédé pour faire fonctionner une soupape (58) de relais ayant un piston (94) de commande et une manchette (96), qui sont mobiles tous deux dans une direction (98) axiale, dans laquelle il est prévu un premier élément (100) élastique, qui soumet la manchette (96) dans la direction (98) axiale à une force de précontrainte, un deuxième élément (102) élastique étant prévu, qui soumet le piston (94) de commande dans la direction (98) axiale à une autre force de précontrainte, **caractérisée en ce que** le deuxième élément (102) élastique a une caractéristique non-linéaire, de sorte qu'une pression (112) d'alimentation en air mise à disposition sur un raccord (104) d'alimentation en air, après déduction de pertes mécaniques et d'un décalage, n'est plus, par l'autre force de précontrainte, mise à l'échelle 1:1 avec une pression (110) de commande mise à disposition sur une entrée (56) de commande de relais.

6. Procédé suivant la revendication 5, **caractérisé en ce que** le piston (94) de commande est déplacé indépendamment de la manchette (96).
